# EUROPEAN PATENT APPLICATION

(11) **EP 4 518 201 A1**
(43) Date of publication of application: **05.03.2025**
(21) Application number: 22939032.3
(22) Date of filing: 27.04.2022
(51) Int. Cl.: H04L 1/00, H04W 72/02

(54) **METHOD AND DEVICE FOR DETERMINING CONFIGURATION INDICATION STATE**

(71) Applicant: Beijing Xiaomi Mobile Software Co., Ltd., Beijing 100085 (CN)
(72) Inventor: LI, Mingju, Beijing 100085 (CN)
(74) Representative: Hersina, Günter
(86) International application number: PCT/CN2022/089678
(87) International publication number: WO 2023/206179

(57) **Abstract**

A method for determining a transmission configuration indication state is executed by a terminal, and comprises: receiving indication information, wherein the indication information is used for indicating at least one set of transmission configuration indication (TCI) states; and determining a TCI state for channel and/or signal transmission according to at least one of the channel and/or signal configuration, the number of TCI states indicated in the indication information and the channel type.

## Description

### TECHNICAL FIELD

The disclosure relates to a field of communication technologies, in particular to a method and a device for determining a transmission configuration indication (TCI) state.

### BACKGROUND

In a communication system, beam-based transmission and reception are required to ensure coverage.

In order to reduce signaling overhead in the related system, a unified transmission configuration indication (TCI) state may be used to perform uplink and downlink separate indication or joint indication. In a case that single downlink control information (DCI) is configured to indicate at least one set of TCI states, for a channel or a signal that is configured to be transmitted based on multiple sets of TCI states, how the terminal determines which set of TCI states is used for transmission of the channel or the signal, to ensure consistency in TCI state adoption between the terminal and the network device, has become a problem required to be solved urgently.

### SUMMARY

Embodiments of the disclosure provide a method for determining a transmission configuration indication (TCI) state and a communication device.

According to a first aspect of embodiments of the disclosure, there is provided a method for determining a TCI state. The method is performed by a terminal, and the method includes: receiving indication information, in which the indication information is configured to indicate at least one set of TCI states; and determining a TCI state for transmission of a channel and/or a signal according to at least one of a configuration for the channel and/or the signal, a number of TCI states indicated in the indication information, or a channel type.

In the disclosure, after receiving at least one set of TCI states indicated by the network device, the terminal can determine a TCI state for transmission of a channel and/or a signal according to at least one of a configuration for the channel and/or the signal, a number of TCI states indicated in the indication information, or a channel type, such that the TCI state determined by the terminal for transmission of the channel and/or the signal is consistent with the TCI state determined by the network device, thereby ensuring the transmission reliability and improving the transmission quality.

According to a second aspect of embodiments of the disclosure, there is provided a method for determining a TCI state. The method is performed by a network device, and the method includes: sending indication information to a terminal, in which the indication information is configured to indicate at least one set of TCI states; and determining a TCI state for transmission of a channel and/or a signal according to at least one of a configuration for the channel and/or the signal of the terminal, a number of TCI states indicated in the indication information, or a channel type.

In the disclosure, after sending at least one set of TCI states to the terminal, the network device can determine a TCI state for transmission of a channel and/or a signal according to a configuration for the channel and/or the signal, so that the TCI state determined by the terminal for transmission of the channel and/or the signal is consistent with the TCI state determined by the network device, thereby ensuring the transmission reliability and improving the transmission quality.

According to a third aspect of embodiments of the disclosure, there is provided a communication device. The device is provided in a terminal, and the device includes:
a transceiver module, configured to receive indication information, in which the indication information is configured to indicate at least one set of TCI states; and
a processing module, configured to determine a TCI state for transmission of a channel and/or a signal according to at least one of a configuration for the channel and/or the signal, a number of TCI states indicated in the indication information, or a channel type.

According to a fourth aspect of embodiments of the disclosure, there is provided a communication device. The device is provided in a network device, and the device includes:
a transceiver module, configured to send indication information to a terminal, in which the indication information is configured to indicate at least one set of TCI states; and
a processing module, configured to determine a TCI state for transmission of a channel and/or a signal according to at least one of a configuration for the channel and/or the signal of the terminal, a number of TCI states indicated in the indication information, or a channel type.

According to a fifth aspect of embodiments of the disclosure, a communication device is provided. The communication device includes: a processor. When the processor calls a computer program stored in a memory, the method described in the first aspect above is implemented.

According to a sixth aspect of embodiments of the disclosure, a communication device is provided. The communication device includes: a processor. When the processor calls a computer program stored in a memory, the method described in the second aspect above is implemented.

According to a seventh aspect of embodiments of the disclosure, a communication device is provided. The communication device includes: a processor and a memory having a computer program stored thereon. The processor executes the computer program stored in the memory, to cause the communication device to implement the method described in the first aspect above.

According to an eighth aspect of embodiments of the disclosure, a communication device is provided. The communication device includes: a processor and a memory having a computer program stored thereon. The processor executes the computer program stored in the memory, to cause the communication device to implement the method described in the second aspect above.

According to a ninth aspect of embodiments of the disclosure, a communication device is provided. The communication device includes: a processor and an interface circuit. The interface circuit is configured to receive code instructions and transmit them to the processor. The processor is configured to run the code instructions to cause the communication device to perform the method described in the first aspect above.

According to a tenth aspect of embodiments of the disclosure, a communication device is provided. The communication device includes: a processor and an interface circuit. The interface circuit is configured to receive code instructions and transmit them to the processor. The processor is configured to run the code instructions to cause the communication device to perform the method described in the second aspect above.

According to an eleventh aspect of embodiments of the disclosure, a communication system is provided. The system includes the communication device of the third aspect and the communication device of the fourth aspect; or the system includes the communication device of the fifth aspect and the communication device of the sixth aspect; or the system includes the communication device of the seventh aspect and the communication device of the eighth aspect; or the system includes the communication device of the ninth aspect and the communication device of the tenth aspect.

According to a twelfth aspect of embodiments of the disclosure, a computer-readable storage medium is provided. The computer-readable storage medium is configured to store instructions used by the above network device. When the instructions are executed, the terminal is caused to implement the method of the first aspect.

According to a thirteenth aspect of embodiments of the disclosure, a readable storage medium is provided. The readable storage medium is configured to store instructions used by the above terminal. When the instructions are executed, the network device is caused to implement the method of the second aspect.

According to a fourteenth aspect of embodiments of the disclosure, a computer program product including a computer program is provided. When the computer program is run by a computer, the computer is caused to implement the method of the first aspect.

According to a fifteenth aspect of embodiments of the disclosure, a computer program product including a computer program is provided. When the computer program is run by a computer, the computer is caused to implement the method of the second aspect.

According to a sixteenth aspect of embodiments of the disclosure, a chip system is provided. The chip system includes at least one processor and an interface for supporting the network device in realizing the functions involved in the first aspect, e.g., determining or processing at least one of data or information involved in the method described above. In a possible design, the chip system further includes a memory. The memory is configured to store necessary computer programs and data of the source secondary node. The chip system may consist of chips or may include a chip and other discrete devices.

According to a seventeenth aspect of embodiments of the disclosure, a chip system is provided. The chip system includes at least one processor and an interface for supporting the terminal in realizing the functions involved in the second aspect, e.g., determining or processing at least one of data or information involved in the method described above. In a possible design, the chip system further includes a memory. The memory is configured to store necessary computer programs and data of the source master node. The chip system may consist of chips or may include a chip and other discrete devices.

According to an eighteenth aspect of embodiments of the disclosure, a computer program is provided. When the computer program is running on a computer, the computer is caused to implement the method of the first aspect.

According to a nineteenth aspect of embodiments of the disclosure, a computer program is provided. When the computer program is running on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic diagram of a communication system provided by an embodiment of the disclosure.
FIG. 2 is a flowchart of a method for determining a transmission configuration indication (TCI) state provided by an embodiment of the disclosure.
FIG. 3 is a flowchart of a method for determining a TCI state provided by an embodiment of the disclosure.
FIG. 4 is a flowchart of a method for determining a TCI state provided by an embodiment of the disclosure.
FIG. 5 is a flowchart of a method for determining a TCI state provided by an embodiment of the disclosure.
FIG. 6 is a flowchart of a method for determining a TCI state provided by an embodiment of the disclosure.
FIG. 7 is a flowchart of a method for determining a TCI state provided by an embodiment of the disclosure.
FIG. 8 is a flowchart of a method for determining a TCI state provided by an embodiment of the disclosure.
FIG. 9 is a flowchart of a method for determining a TCI state provided by an embodiment of the disclosure.
FIG. 10 is a flowchart of a method for determining a TCI state provided by an embodiment of the disclosure.
FIG. 11 is a flowchart of a method for determining a TCI state provided by an embodiment of the disclosure.
FIG. 12 is a schematic diagram of a communication device provided by an embodiment of the disclosure.
FIG. 13 is a schematic diagram of another communication device provided by an embodiment of the disclosure.
FIG. 14 is a schematic diagram of a chip provided by an embodiment of the disclosure.

### DETAILED DESCRIPTION

For ease of understanding, the terms involved in the disclosure are first introduced.

### 1. Transmission configuration indication (TCI)

The TCI is used to inform a user to receive a physical downlink control channel (PDCCH) and a physical downlink shared channel (PDSCH) by using the same spatial reception parameters/information as a received synchronization signal block (SSB) or channel state information reference signal (CSI-RS) that is sent by a network device; or inform the user to send a physical uplink control channel (PUCCH) and a physical uplink shared channel (PUSCH) by using the same spatial transmission parameters/information as a sent reference signal, e.g., sounding reference signal (SRS) or CSI-RS.

### 2. Downlink control information (DCI)

The DCI is carried by the PDCCH sent by the network device to the terminal, and includes uplink and downlink resource allocation, hybrid automatic repeat request (HARQ) information, power control, etc.

In order to better understand a method for determining a TCI state disclosed by embodiments of the disclosure, a communication system to which the embodiments of the disclosure are applied is first described below.

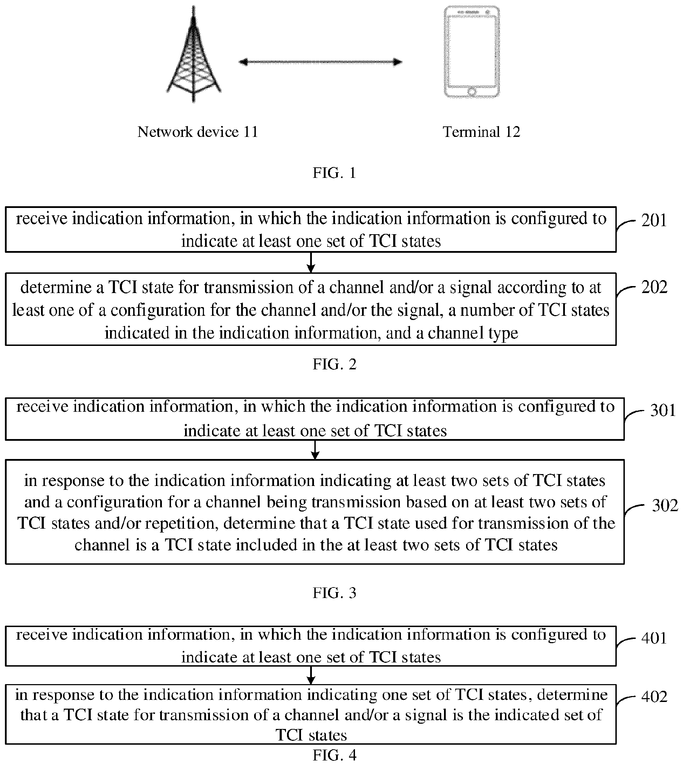

As illustrated in FIG. 1, FIG. 1 is a schematic diagram of a communication system provided by an embodiment of the disclosure. The communication system may include, but is not limited to, a network device and a terminal. The number and form of devices illustrated in FIG. 1 are only for examples and do not constitute a limitation on the embodiments of the disclosure, and two or more network devices and two or more terminals may be included in practical applications. For example, the communication system shown in FIG. 1 includes a network device 11 and a terminal 12.

It is noteworthy that the technical solutions of the embodiments of the disclosure can be applied to various communication systems, such as, a long term evolution (LTE) system, a 5th generation (5G) mobile communication system, a 5G new radio (NR) system, or other future new mobile communication systems.

The network device 11 in the embodiments of the disclosure is an entity on a network side for transmitting or receiving signals. For example, the network device 11 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in the embodiments of the disclosure. The network device provided by the embodiments of the disclosure may be composed of a central unit (CU) and a distributed unit (DU). The CU may also be called control unit. The use of CU-DU structure allows to divide a protocol layer of the network device, such as a base station, such that some functions of the protocol layer are placed in the CU for centralized control, and some or all of the remaining protocol layer functions are distributed in the DU, and the DU is centrally controlled by the CU.

The terminal 12 in the embodiments of the disclosure is an entity on a user side for receiving or transmitting signals, such as a cellular phone. The terminal may also be referred to as terminal, user equipment (UE), mobile station (MS), mobile terminal (MT), and the like. The terminal can be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

It is understandable that the communication system described in the embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

In the disclosure, in order to solve the problem of how a terminal determines which set of TCI states to be used for transmission when multiple sets of TCI states are indicated by single DCI, so as to maintain a consistency in TCI state adoption between a terminal and a network device and ensure the reliability of transmission, a method for determining a TCI state according to a configuration for a channel and/or a signal is proposed. This ensures that the terminal and network device maintain a consistency in TCI state adoption, and ensures the transmission reliability.

It should be noted that in the disclosure, the method for determining a TCI state provided in any embodiment can be executed alone, or can be executed in combination with possible implementations in other embodiments, or can be executed in combination with any technical solution in the related art.

As illustrated in FIG. 2, FIG. 2 is a flowchart of a method for determining a TCI state provided by an embodiment of the disclosure. The method is performed by a terminal. As illustrated in FIG. 2, the method may include, but is not limited to, the following steps.

At step 201, indication information is received, in which the indication information is configured to indicate at least one set of TCI states.

One set of TCI states refers to one TCI state or a pair of TCI states. For example, one set of TCI states may be a joint TCI state (or joint downlink (DL) TCI state), or a separate DL TCI state, or a separate uplink (UL) TCI state; or a separate DL TCI state and a separate UL TCI state, which is not limited in the disclosure.

Optionally, the indication information may be a medium access control (MAC) control element (CE), which may be used to activate at least one set of TCI states associated with a code point.

Optionally, the indication information may also be a MAC CE and DCI. That is, the MAC CE is used to directly activate at least one set of TCI states respectively associated with multiple code points, and the DCI indicates one of the code points, and this one code point is associated with at least one set of TCI states.

At step 202, a TCI state for transmission of a channel and/or a signal is determined according to at least one of a configuration for the channel and/or the signal, a number of TCI states indicated in the indication information, or a channel type.

The channel or channel type includes at least one of: a PDCCH, a PDSCH, a dynamic-grant PUSCH, a configured-grant type 2 PUSCH, repetition of a configured-grant type 2 PUSCH, repetition of a configured-grant type 1 PUSCH, a configured-grant type 1 PUSCH, or a PUCCH. The dynamic-grant PUSCH may also be called dynamic grant PUSCH. The configured-grant type 2 PUSCH can also be called type 2 configured grant PUSCH or configured grant type 2 PUSCH. The configured-grant type 1 PUSCH can also be called type 1 configured grant PUSCH or configured grant type 1 PUSCH.

The signal includes at least one of: a channel state information reference signal (CSI RS) or a sounding reference signal (SRS).

Optionally, the above-mentioned signal may be any of the following signal types: periodic, semi-persistent, and aperiodic.

Optionally, one set of TCI states of the at least one set of TCI states indicated by the indication information includes a joint TCI state (or called a joint DL TCI state), i.e., the joint TCI state may be used for both UL and DL channels/signals.

Alternatively, one set of TCI states of the at least one set of TCI states indicated by the indication information includes a separate UL TCI state and/or a DL TCI state.

In the disclosure, after receiving at least one set of TCI states indicated by the network device, the terminal may determine a TCI state used for transmission of a channel according to a channel type, or may determine a TCI state for transmission of a channel and/or a signal according to a configuration for the channel and/or the signal. Alternatively, the terminal may determine a TCI state for transmission of a channel and/or a signal according to a number of sets of TCIs specifically indicated in the indication information. Alternatively, the terminal may determine a TCI state for transmission of a channel and/or a signal according to a configuration for the channel and/or the signal and a number of sets of TCIs specifically indicated in the indication information, which is not limited in the disclosure.

The configuration for the channel and/or the signal may be used to describe whether the channel or the signal is transmitted based on one set of TCI states or multiple sets of TCI states.

Optionally, in the disclosure, the configuration may be determined according to a number of transmission reception points (TRPs) configured for the channel and/or the signal. For example, if the CSI RS and the SRS are each configured with a single TRP (S-TRP), it can be determined that their configurations are transmission based on one set of TCI states. If the PDCCH is configured with multiple TRPs (M-TRP), it can be determined that the configuration for the PDCCH is transmission based on multiple sets of TCI states.

Optionally, the above signals may all be transmitted based on an S-TRP, i.e., the configuration for each signal is transmission based on one set of TCI states.

Optionally, channel transmission may be transmission based on at least two sets of TCI states and/or repetition.

Optionally, the number of TCI states indicated by the indication information is one set of TCI states or at least two sets of TCI states indicated in the indication information.

The channel type indicates that the channel is one type or some types of the above mentioned types of channels.

Optionally, for the PDCCH, the PDSCH, the PUCCH and the PUSCH, it is possible that the configuration for the at least one channel is transmission based on one set of TCI states, or the configuration for the at least one channel is transmission based on multiple sets of TCI states.

For example, the combination of configurations for each channel may include: S-TRP PDCCH and M-TRP PDSCH; S-TRP PDSCH and M-TRP PDCCH; S-TRP PDCCH and M-TRP PUSCH; S-TRP PUSCH and M-TRP PDCCH; S-TRP PUSCH and M-TRP PDSCH; S-TRP PDSCH and M-TRP PUSCH; S-TRP PDCCH, M-TRP PDSCH and M-TRP PUSCH; S-TRP PDCCH, M-TRP PDSCH and M-TRP PUCCH; S-TRP PDCCH, S-TRP PUCCH, M-TRP PDSCH and M-TRP PUSCH; S-TRP PDCCH, M-TRP PUCCH, M-TRP PDSCH and M-TRP PUSCH, and the like.

The M-TRP PDCCH refers to a PDCCH including two search space (SS) sets that have a linked relation, PDCCH candidates with the same number in the two SS sets are used to transmit one PDCCH, and the SS sets are associated with respective control resource sets (CORESETs). Alternatively, the M-TRP PDCCH may also include a single frequency network (SFN) method, which means that one CORESET is configured with two TCI states, and any PDCCH candidate of the CORESET is associated with the two TCI states.

The M-TRP PDSCH refers to a PDSCH configured with a repetition scheme, a repetition number, or two code division multiplexing (CDM) groups. The repetition scheme includes at least one of: a frequency division multiplexing (FDM) scheme A, a FDM scheme B, or a time division multiplexing (TDM) scheme A.

The M-TRP PUSCH refers to a PUSCH that is associated with at least one of: two SRS resource indicators, two layer fields, two PUSCH precoder fields, or two SRS resource sets.

The M-TRP PUCCH refers to a PUCCH that is associated with at least one of: two pieces of spatial-relation-info, two TCI states (including separate UL TCI state or joint TCI state), or two power control parameter sets.

In the disclosure, after receiving at least one set of TCI states indicated by the network device, the terminal can determine a TCI state for transmission of a channel and/or a signal according to at least one of a configuration for the channel and/or the signal, a number of TCI states indicated in the indication information, or a channel type, such that the TCI state determined by the terminal for transmission of the channel and/or the signal is consistent with the TCI state determined by the network device, thereby ensuring the transmission reliability and improving the transmission quality.

As illustrated in FIG. 3, FIG. 3 is a flowchart of a method for determining a TCI state provided by an embodiment of the disclosure. The method is performed by a terminal. As illustrated in FIG. 3, the method may include, but is not limited to, the following steps.

At step 301, indication information is received, in which the indication information is configured to indicate at least one set of TCI states.

The specific implementation in the step 301 can be described in detail with reference to any embodiment of the disclosure and will not be repeated herein.

At step 302, in response to the indication information indicating at least two sets of TCI states and a configuration for a channel being transmission based on at least two sets of TCI states and/or repetition, it is determined that a TCI state used for transmission of the channel is a TCI state included in the at least two sets of TCI states.

Optionally, the channel transmitted based on at least two sets of TCI states may be any one of: a PDCCH, a PDSCH, a dynamic-grant PUSCH, a configured-grant type 2 PUSCH, repetition of a configured-grant type 2 PUSCH, repetition of a configured-grant type 1 PUSCH, a configured-grant type 1 PUSCH, and a PUCCH. The configured-grant type 2 PUSCH, the repetition of a configured-grant type 2 PUSCH and the repetition of a configured-grant type 1 PUSCH require to be indicated by the DCI. The configured-grant type 1 PUSCH does not require to be indicated by the DCI.

For the combination forms of configurations for each channel reference can be made to the detailed description of any of the embodiments of the disclosure, which will not be repeated herein again.

In the disclosure, after receiving at least two sets of TCI states indicated by the network device, for the channel transmission being transmission based on at least two sets of TCI states and/or repetition, the terminal may determine that the TCI state used for transmission of the channel is a TCI state included in the at least two sets of TCI states, such that the TCI state determined by the terminal for transmission of the channel and/or the signal is consistent with the TCI state determined by the network device, thereby ensuring the transmission reliability and improving the transmission quality.

As illustrated in FIG. 4, FIG. 4 is a flowchart of a method for determining a TCI state provided by an embodiment of the disclosure. The method is performed by a terminal. As illustrated in FIG. 4, the method may include, but is not limited to, the following steps.

At step 401, indication information is received, in which the indication information is configured to indicate at least one set of TCI states.

For the specific implementation in the step 401 reference can be made to the detailed description of any embodiment of the disclosure, which will not be repeated herein again.

At step 402, in response to the indication information indicating one set of TCI states, it is determined that a TCI state for transmission of a channel and/or a signal is the indicated set of TCI states.

In the disclosure, if the indication information indicates one set of TCI states, regardless of how many sets of TCI states are configured for transmission of the channel or the signal, the terminal may then determine that it can only perform transmission based on the newly indicated set of TCI states.

That is, if the configuration for a certain channel is transmission based on multiple sets of TCI states, but the current indication information indicates only one set of TCI states, the channel may be caused to temporarily fall back to transmission based on one set of TCI states, i.e., S-TRP transmission.

Optionally, for a channel configured for transmission based on multiple sets of TCI states, in a case where the network device only indicates one set of TCI states for transmission, the terminal may determine that the TCI state used for transmission of a part of the channels is the indicated set of TCI states.

For example, for a PDSCH, a dynamic-grant PUSCH, a configured-grant type 2 PUSCH, or repetition of a configured-grant type 2 PUSCH, and repetition of a configured-grant type 1 PUSCH, these channels are configured for transmission based on multiple sets of TCI states. However, upon receiving the indication information indicating only one set of TCI states, the terminal can determine that the TCI state used for transmission of these channels is the indicated set of TCI states.

Optionally, for a PDCCH that is transmitted based on a second CORESET, in which the second CORESET is configured with at least two sets of TCI states, if the current indication information indicates only one set of TCI states, the terminal may determine that the TCI state used for transmission of this PDCCH is the set of TCI states indicated by the indication information. That is, transmission of the PDCCH temporarily falls back to transmission based on one set of TCI states, i.e., S-TRP transmission.

The second CORESET described above is configured with SFN methods, including SFN method 1 and SFN method 2. That is, the PDCCH can be transmitted on the PDCCH candidate associated with this CORESET using the same time-frequency domain resource and the same port, but in different TCI states.

Optionally, for a first PDCCH, in which the first PDCCH includes two candidate PDCCHs (i.e., PDCCH candidates), the two SS sets associated with the two PDCCH candidates have a linked relation, and the SS sets are associated with their respective CORESETs, if the current indication information only indicates one set of TCI states, the terminal can determine that the TCI state used for transmission of the first PDCCH is the set of TCI states indicated by the indication information. That is, the terminal only needs to receive the PDCCH based on the set of TCI states indicated by the indication information on the PDCCH candidate associated with the set of TCI states indicated by the indication information, and there is no need to monitor the other PDCCH candidate that is not indicated with a TCI state.

That is, when the terminal receives a set of TCI states indicated by the network device, it can determine that transmission of some of the above channels is based on the indicated set of TCI states. That is, if the above configuration for some of the channels is transmission based on multiple sets of TCI states, it is necessary to temporarily switch to transmission based on one set of TCI states, that is, to fall back to S-TRP.

Optionally, the terminal can also determine the TCI states used for transmitting the rest of the channels based on the configurations for these channels. For example, if a channel or signal is configured to be based on one set of TCI states, it can be determined that the channel or signal is transmitted based on the set of TCI states. For a channel configured to be based on multiple sets of TCI states, the TCI states for transmission can be configured in other ways, which is not limited herein.

For the combination forms of the configurations for the channels reference may be made to the detailed description of any of the embodiments of the disclosure, which will not be repeated herein again.

In the disclosure, after receiving one set of TCI states indicated by the network device, the terminal can determine the TCI state for transmission of the channel or signal to be the indicated set of TCI states, such that the TCI state determined by the terminal for transmission of the channel and/or the signal is consistent with the TCI state determined by the network device, which ensures the transmission reliability and improves the quality of transmission.

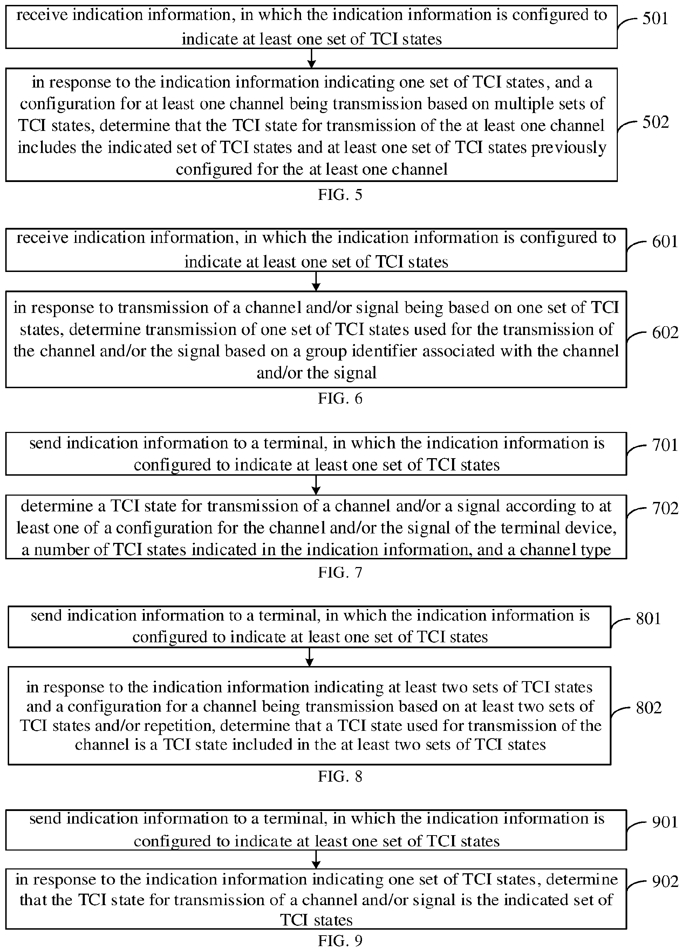

As illustrated in FIG. 5, FIG. 5 is a flowchart of a method for determining a TCI state provided by an embodiment of the disclosure. The method is performed by a terminal. As illustrated in FIG. 5, the method may include, but is not limited to, the following steps.

At step 501, indication information is received, in which the indication information is configured to indicate at least one set of TCI states.

For the specific implementation of step 501 reference can be made to the detailed description of any embodiment of the disclosure, which will not be repeated herein again.

At step 502, in response to the indication information indicating one set of TCI states, and a configuration for at least one channel being transmission based on multiple sets of TCI states, it is determined that the TCI state for transmission of the at least one channel includes the indicated set of TCI states and at least one set of TCI states previously configured for the at least one channel.

In the disclosure, if the indication information received by the terminal indicates only one set of TCI states, and the configuration for a certain channel is transmission based on multiple sets of TCI states, the terminal may determine that the TCI state used for transmission of the channel includes the indicated set of TCI states and at least one set of TCI states previously configured for the channel.

The at least one set of TCI states previously configured for the channel refers to at least one set of TCI states indicated by the latest indication information before the indication information.

For example, if the PDCCH is configured to be based on two sets of TCI states, and the indication information indicates only one set of TCI states, it is determined that the PDCCH can be transmitted based on the newly indicated set of TCI states and at least one set of TCI states previously configured for the PDCCH. For example, the indication information at time t1 indicates a first set of TCI states and a second set of TCI states, and the indication information at time t2 indicates a third set of TCI states. If the terminal determines that the third set of TCI states is an update for the first set of TCI states, the terminal can use the third set of TCI states and the second set of TCI states as the TCI states for transmission of the PDCCH. The time t1 is the time closest to the time t2 at which the indication information is received. The terminal may determine that the third set of TCI states is an update for the first set of TCI states according to the indication information or other configuration information, or according to default rules, which is not limited here.

Alternatively, if the channel is a PDCCH transmitted based on a second CORESET and the second CORESET is configured with at least two sets of TCI states, after receiving the indication information indicating one set of TCI states, the terminal may determine the TCI state for transmission of the PDCCH to be the current indicated set of TCI states, or the current indicated set of TCI states and at least one set of TCI states previously configured for the PDCCH. For example, the indication information at time t1 indicates a first set of TCI states and a second set of TCI states, and the indication information at time t2 indicates a third set of TCI states. The terminal may only use the third set of TCI states as the TCI state for transmission of the PDCCH, or the terminal determines that the third set of TCI states is an update for the first set of TCI state, and then the terminal uses the third set of TCI states and the second set of TCI states as the TCI states for transmission of the PDCCH. The time t1 is the time closest to the time t2 at which the indication information is received. The terminal may determine that the third set of TCI states is an update for the first set of TCI states according to the indication information or other configuration information, or according to default rules, which is not limited here.

The second CORESET described above is configured with SFN methods, including SFN method 1 and SFN method 2. That is, the PDCCH can be transmitted on the PDCCH candidate associated with this CORESET using the same time-frequency domain resource and the same port, but in different TCI states.

Alternatively, in a case where the channel is a first PDCCH, in which the first PDCCH includes two PDCCH candidates, two SS sets associated with the two PDCCH candidates have a linked relation, and the SS sets are associated with respective CORESETs, when the terminal receives the indication information that indicates a set of TCI states, it can determine that the TCI state used for transmission of the PDCCH is the current indicated set of TCI states, or the current indicated set of TCI states and at least one set of TCI states previously configured for the PDCCH. For example, the indication information at time t1 indicates a first set of TCI states and a second set of TCI states, the terminal determines that the first set of TCI states is associated with a first PDCCH candidate and the second set of TCI states is associated with a second PDCCH candidate. The indication information at time t2 indicates a third set of TCI states. If the terminal determines that the third set of TCI states is associated with the first PDCCH candidate, the terminal may use only the third set of TCI states as the TCI state for transmission of the PDCCH, that is, the terminal only uses the third set of TCI states to receive the PDCCH on the first PDCCH candidate. Or, the terminal determines that the third set of TCI states is an update for the first set of TCI states, the terminal may use the third set of TCI states and the second set of TCI states as TCI states for transmission of the PDCCH. That is, the terminal uses the third set of TCI states to receive the PDCCH on the first PDCCH candidate and uses the second set of TCI states to receive the PDCCH on the second PDCCH candidate. The time t1 is the time closest to the time t2 at which the indication information is received. The terminal determines that the first set of TCI states is associated with the first PDCCH candidate and the second set of TCI states is associated with the second PDCCH candidate, and determines that the third set of TCI states is an update for the first set of TCI states, according to the indication information or other configuration information, or according to default rules, which is not limited here.

Optionally, when receiving the indication information indicating only one set of TCI states, the terminal may only determine that the TCI state used for transmission of a specific channel includes the indicated set of TCI states and at least one set of TCI states previously configured for the specific channel. For example, the specific channel may be a configured-grant type 1 PUSCH or a PUCCH.

In the disclosure, after receiving the set of TCI states indicated by the network device, when multiple sets of TCI states are configured for at least one channel, the terminal can determine that the TCI state used for transmission of at least one channel includes the indicated set of TCI states and at least one set of TCI states previously configured for the at least one channel, such that the TCI state determined by the terminal for transmission of the channel and/or the signal is consistent with the TCI state determined by the network device, thereby ensuring the reliability of transmission and improving the transmission quality.

As illustrated in FIG. 6, FIG. 6 is a flowchart of a method for determining a TCI state provided by an embodiment of the disclosure. The method is performed by a terminal. As illustrated in FIG. 6, the method may include, but is not limited to, the following steps.

At step 601, indication information is received, in which the indication information is configured to indicate at least one set of TCI states.

For the specific implementation of step 601 reference can be made to the detailed description of any embodiment of the disclosure, which will not be repeated herein again.

At step 602, in response to transmission of a channel and/or signal being based on one set of TCI states, one set of TCI states used for the transmission of the channel and/or the signal is determined based on a group identifier associated with the channel and/or the signal.

The channel or channel type includes at least one of: a PDCCH, a PDSCH, a configured-grant type 1 PUSCH, a configured-grant type 2 PUSCH, a dynamic-grant PUSCH, or a PUCCH. The signal includes at least one of: a CSI-RS or an SRS.

Optionally, the terminal may determine a group identifier of a channel or signal in any of the following ways: receiving configuration information configured to indicate a group identifier associated with a channel and/or a signal; or, in response to the channel being a first PUCCH, and a resource location of the first PUCCH being determined based on a parameter of a first CORESET, determining a group identifier associated with the first CORESET as a group identifier associated with the first PUCCH; or, in response to the channel being a second PUCCH with a number greater than a threshold, and a resource location of the second PUCCH being determined based on a total number of CCEs of a second CORESET and a CCE start position of a PDCCH candidate, determining a group identifier associated with the second CORESET as a group identifier associated with the second PUCCH; or, in response to the channel being a PDCCH, determining a group identifier of a CORESET or a CORESET pool index associated with the PDCCH as a group identifier associated with the PDCCH.

Optionally, the indication information may include a group identifier (ID, which can also be called identity document) or an index associated with each set of TCI states. After receiving the indication information, the terminal may determine the set of TCI states associated with the group identifier associated with the channel or the signal in the indication information as the TCI state for transmission of the channel and/or the signal.

The group identifier includes at least one of: a CORESET pool index, a CORESET group identifier, a PUCCH group identifier, a PUSCH group identifier, or a PDSCH group identifier.

That is, the first indication information may include a CORESET pool index, a CORESET group ID, a PUCCH group ID, a PUSCH group ID or a PDSCH group ID associated with each set of TCI states.

In the disclosure, if the terminal receives at least one set of TCI states, then for transmission of a channel and/or signal based on only one set of TCI states, the terminal determines a TCI state whose associated group ID in the indication information is the same as a group ID of the channel or signal as the set of TCI states for transmission of the channel or signal, such that the TCI state determined by the terminal for transmission of the channel and/or the signal is consistent with the TCI state determined by the network device, thereby ensuring the transmission reliability and improving the quality of the transmission.

As illustrated in FIG. 7, FIG. 7 is a flowchart of a method for determining a TCI state provided by an embodiment of the disclosure. The method is performed by a network device. As illustrated in FIG. 7, the method may include, but is not limited to, the following steps.

At step 701, indication information is sent to a terminal, in which the indication information is configured to indicate at least one set of TCI states.

One set of TCI states refers to one TCI state or a pair of TCI states. For example, one set of TCI states may be a joint TCI state (or joint DL TCI state), or a separate DL TCI state, or a separate UL TCI state, or a separate DL TCI state and a separate UL TCI state, which is not limited in the disclosure.

Optionally, the indication information may be a MAC CE, which may be used to activate at least one set of TCI states associated with a code point.

Optionally, the indication information may also be a MAC CE and DCI. That is, the MAC CE may be used to directly activate at least one set of TCI states associated with multiple code points, and the DCI indicates one of the code points, and this one code point is associated with at least one set of TCI states.

At step 702, a TCI state for transmission of a channel and/or a signal is determined according to at least one of a configuration for the channel and/or the signal of the terminal, a number of TCI states indicated in the indication information, or a channel type.

The channel or channel type includes at least one of: a PDCCH, a PDSCH, a dynamic-grant PUSCH, a configured-grant type 2 PUSCH, repetition of a configured-grant type 2 PUSCH, repetition of a configured-grant type 1 PUSCH, a configured-grant type 1 PUSCH, or a PUCCH. The dynamic-grant PUSCH may also be called dynamic grant PUSCH. The configured-grant type 2 PUSCH may also be called type 2 configured grant PUSCH or configured grant type 2 PUSCH. The configured-grant type 1 PUSCH may also be called type 1 configured grant PUSCH or configured grant type 1 PUSCH.

The signal includes at least one of: a CSI RS or an SRS.

Optionally, the above-mentioned signal may be any of the following signal types: periodic, semi-persistent, and aperiodic.

Optionally, one set of TCI states of the at least one set of TCI states indicated by the indication information includes a joint TCI state, i.e., the joint TCI state may be used for both UL and DL channels/signals.

Alternatively, one set of TCI states of the at least one set of TCI states indicated by the indication information includes a separate UL TCI state and/or a DL TCI state.

In the disclosure, after receiving at least one set of TCI states indicated by the network device, the terminal may determine a TCI state used for transmission of a channel according to a channel type; or may determine a TCI state for transmission of a channel and/or a signal according to a configuration for the channel and/or the signal; or may determine a TCI state for transmission of a channel and/or a signal according to a number of sets of TCIs specifically indicated in the indication information; or may determine a TCI state for transmission of a channel and/or a signal according to a configuration for the channel and/or the signal and a number of sets of TCIs specifically indicated in the indication information, which is not limited in the disclosure.

The configuration for the channel and/or the signal for the terminal may be used to describe whether the channel or the signal is transmitted based on one set of TCI states or multiple sets of TCI states.

Optionally, in the disclosure, the configuration may be determined according to a number of TRPs configured for the channel and/or the signal. For example, if the CSI RS and the SRS are each configured with an S-TRP, it can be determined that their configurations are transmission based on one set of TCI states. If the PDCCH is configured with M-TRP, it can be determined that the configuration for the PDCCH is transmission based on multiple sets of TCI states.

Optionally, the above signals may all be transmitted based on an S-TRP, i.e., the configuration for each signal is transmission based on one set of TCI states.

Optionally, channel transmission may be transmission based on at least two sets of TCI states and/or repetition.

Optionally, the number of TCI states indicated by the indication information is one set of TCI states or at least two sets of TCI states indicated in the indication information.

The channel type indicates that the channel is one type or some types of the above mentioned types of channels.

Optionally, for the PDCCH, the PDSCH, the PUCCH and the PUSCH, it is possible that the configuration for the at least one channel is transmission based on one set of TCI states, or the configuration for the at least one channel is transmission based on multiple sets of TCI states.

For example, the combination of configurations for each channel may include: S-TRP PDCCH and M-TRP PDSCH; S-TRP PDSCH and M-TRP PDCCH; S-TRP PDCCH and M-TRP PUSCH; S-TRP PUSCH and M-TRP PDCCH; S-TRP PUSCH and M-TRP PDSCH; S-TRP PDSCH and M-TRP PUSCH; S-TRP PDCCH, M-TRP PDSCH and M-TRP PUSCH; S-TRP PDCCH, M-TRP PDSCH and M-TRP PUCCH; S-TRP PDCCH, S-TRP PUCCH, M-TRP PDSCH and M-TRP PUSCH; S-TRP PDCCH, M-TRP PUCCH, M-TRP PDSCH and M-TRP PUSCH, and the like.

The M-TRP PDCCH refers to a PDCCH including two SS sets that have a linked relation, PDCCH candidates with the same number in the two SS sets are used to transmit one PDCCH, and the SS sets are associated with respective CORESETs. Alternatively, the M-TRP PDCCH may also include an SFN method, which means that one CORESET is configured with two TCI states, and any PDCCH candidate of the CORESET is associated with the two TCI states.

The M-TRP PDSCH refers to a PDSCH configured with a repetition scheme, a repetition number, or two CDM groups. The repetition scheme includes at least one of: a FDM scheme A, a FDM scheme B, or a TDM scheme A.

The M-TRP PUSCH refers to a PUSCH that is associated with at least one of: two SRS resource indicators, two layer fields, two PUSCH precoder fields, or two SRS resource sets.

The M-TRP PUCCH refers to a PUCCH that is associated with at least one of: two pieces of spatial-relation-info, two TCI states (including separate UL TCI state or joint TCI state), or two power control parameter sets.

In the disclosure, after receiving at least one set of TCI states indicated by the network device, the terminal can determine a TCI state for transmission of a channel and/or a signal according to at least one of a configuration for the channel and/or the signal, a number of TCI states indicated in the indication information, or a channel type, such that the TCI state determined by the terminal for transmission of the channel and/or the signal is consistent with the TCI state determined by the network device, thereby ensuring the transmission reliability and improving the transmission quality.

As illustrated in FIG. 8, FIG. 8 is a flowchart of a method for determining a TCI state provided by an embodiment of the disclosure. The method is performed by a network device. As illustrated in FIG. 8, the method may include, but is not limited to, the following steps.

At step 801, indication information is sent to a terminal, in which the indication information is configured to indicate at least one set of TCI states.

For the specific implementation of step 801 reference can be made to the detailed description of any embodiment of the disclosure, which will not be repeated herein again.

At step 802, in response to the indication information indicating at least two sets of TCI states and a configuration for a channel being transmission based on at least two sets of TCI states and/or repetition, it is determined that a TCI state used for transmission of the channel is a TCI state included in the at least two sets of TCI states.

Optionally, the channel transmitted based on at least two sets of TCI states may be any one of: a PDCCH, a PDSCH, a dynamic-grant PUSCH, a configured-grant type 2 PUSCH, repetition of a configured-grant type 2 PUSCH, repetition of a configured-grant type 1 PUSCH, a configured-grant type 1 PUSCH, and a PUCCH. The configured-grant type 2 PUSCH, the repetition of a configured-grant type 2 PUSCH and the repetition of a configured-grant type 1 PUSCH require to be indicated by the DCI. The configured-grant type 1 PUSCH does not require to be indicated by the DCI.

For the combination forms of configurations for each channel reference can be made to the detailed description of any of the embodiments of the disclosure, which will not be repeated herein again.

In the disclosure, after receiving at least two sets of TCI states indicated by the network device, for the channel transmission being transmission based on at least two sets of TCI states and/or repetition, the terminal may determine that the TCI state used for transmission of the channel is a TCI state included in the at least two sets of TCI states, such that the TCI state determined by the terminal for transmission of the channel and/or the signal is consistent with the TCI state determined by the network device, thereby ensuring the transmission reliability and improving the transmission quality.

As illustrated in FIG. 9, FIG. 9 is a flowchart of a method for determining a TCI state provided by an embodiment of the disclosure. The method is performed by a network device. As illustrated in FIG. 9, the method may include, but is not limited to, the following steps.

At step 901, indication information is sent to a terminal, in which the indication information is configured to indicate at least one set of TCI states.

For the specific implementation of step 901 reference can be made to the detailed description of any embodiment of the disclosure, which will not be repeated herein again.

At step 902, in response to the indication information indicating one set of TCI states, it is determined that a TCI state for transmission of a channel and/or signal is the indicated set of TCI states.

In the disclosure, if the indication information indicates one set of TCI states, regardless of how many sets of TCI states are configured for transmission of the channel or the signal, the terminal may then determine that it can only perform transmission based on the newly indicated set of TCI states.

That is, if the configuration for a certain channel is transmission based on multiple sets of TCI states, but the current indication information indicates only one set of TCI states, the channel may be caused to temporarily fall back to transmission based on one set of TCI states, i.e., S-TRP transmission.

Optionally, in a case where the network device only indicates one set of TCI states for transmission to the terminal, the terminal may determine that the TCI state used for transmission of a part of the channels is the indicated set of TCI states.

For example, for a PDSCH, a dynamic-grant PUSCH, a configured-grant type 2 PUSCH, or repetition of a configured-grant type 2 PUSCH, and repetition of a configured-grant type 1 PUSCH, these channels are configured for transmission based on multiple sets of TCI states. However, upon receiving the indication information indicating only one set of TCI states, the terminal may determine that the TCI state used for transmission of these channels is the indicated set of TCI states.

Optionally, for a PDCCH that is transmitted based on a second CORESET, the second CORESET is configured with at least two sets of TCI states, if the current indication information indicates only one set of TCI states, the terminal may determine that the TCI state used for transmission of this PDCCH is the set of TCI states indicated by the indication information. That is, transmission of the PDCCH temporarily falls back to transmission based on one set of TCI states, i.e., S-TRP transmission.

The second CORESET described above is configured with SFN methods, including SFN method 1 and SFN method 2. That is, the PDCCH can be transmitted on the PDCCH candidate associated with this CORESET using the same time-frequency domain resource and the same port, but in different TCI states.

Optionally, for a first PDCCH, in which the first PDCCH includes two candidate PDCCHs (i.e., PDCCH candidates), the two SS sets associated with the two PDCCH candidates have a linked relation, and the SS sets are associated with their respective CORESETs, if the current indication information only indicates one set of TCI states, the terminal can determine that the TCI state used for transmission of the first PDCCH is the set of TCI states indicated by the indication information. That is, the terminal only needs to receive the PDCCH based on the set of TCI states indicated by the indication information on the PDCCH candidate associated with the set of TCI states indicated by the indication information. There is no need to monitor the other PDCCH candidate that is not indicated with a TCI state.

That is, when the terminal receives a set of TCI states indicated by the network device, it can determine that transmission for some of the above channels is based on the indicated set of TCI states. That is, if the above configuration for some of the channels is transmission based on multiple sets of TCI states, it is necessary to temporarily switch to transmission based on one set of TCI states, that is, to fall back to S-TRP.

Optionally, the terminal can also determine the TCI states used for transmitting the rest of the channels based on the configurations for these channels. For example, if a channel or signal is configured to be based on one set of TCI states, it can be determined that the channel or signal is transmitted based on the set of TCI states. For a channel configured to be based on multiple sets of TCI states, the TCI states for transmission can be configured in other ways, which is not limited herein.

For the combination forms of the configurations for the channels reference may be made to the detailed description of any of the embodiments of the disclosure, which will not be repeated herein again.

In the disclosure, after receiving one set of TCI states indicated by the network device, the terminal can determine the TCI state for transmission of the channel or signal to be the indicated set of TCI states, such that the TCI state determined by the terminal for transmission of the channel and/or the signal is consistent with the TCI state determined by the network device, which ensures the transmission reliability and improves the quality of transmission.

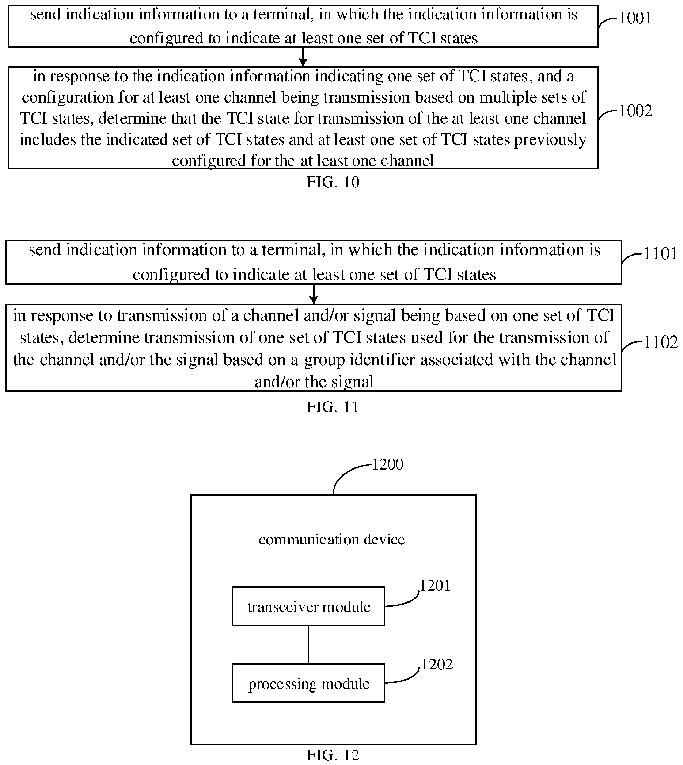

As illustrated in FIG. 10, FIG. 10 is a flowchart of a method for determining a TCI state provided by an embodiment of the disclosure. The method is performed by a network device. As illustrated in FIG. 10, the method may include, but is not limited to, the following steps.

At step 1001, indication information is sent to a terminal, in which the indication information is configured to indicate at least one set of TCI states.

For the specific implementation of step 1001 reference can be made to the detailed description of any embodiment of the disclosure, which will not be repeated herein again.

At step 1002, in response to the indication information indicating one set of TCI states, and a configuration for at least one channel being transmission based on multiple sets of TCI states, it is determined that the TCI state for transmission of the at least one channel includes the indicated set of TCI states and at least one set of TCI states previously configured for the at least one channel.

In the disclosure, if the indication information sent by the network device indicates only one set of TCI states, and the configuration for one or more channels is based on two sets of TCI states, the network device may determine that the TCI state used for transmission of the one or more channels includes the indicated set of TCI states and at least one set of TCI states previously configured for the one or more channels.

The at least one set of TCI states previously configured for the channel refers to at least one set of TCI states indicated by the latest indication information before the indication information.

For example, if the PDCCH is configured to be based on two sets of TCI states, and the indication information indicates only one set of TCI states, it is determined that the PDCCH can be transmitted based on the newly indicated set of TCI states and at least one set of TCI states previously configured for the PDCCH. For example, the indication information at time t1 indicates a first set of TCI states and a second set of TCI states, and the indication information at time t2 indicates a third set of TCI states. If the network device determines that the third set of TCI states is an update for the first set of TCI states, the network device can use the third set of TCI states and the second set of TCI states as the TCI states for transmission of the PDCCH. The time t1 is the time closest to the time t2 at which the indication information is sent. The network device may determine that the third set of TCI states is an update for the first set of TCI states according to the indication information or other configuration information, or according to default rules, which is not limited here.

Alternatively, if the channel is a PDCCH transmitted based on a second CORESET and the second CORESET is configured with at least two sets of TCI states, after receiving the indication information indicating one set of TCI states, the network device may determine the TCI state for transmission of the PDCCH to be the current indicated set of TCI states, or the current indicated set of TCI states and at least one set of TCI states previously configured for the PDCCH. For example, the indication information at time t1 indicates a first set of TCI states and a second set of TCI states, and the indication information at time t2 indicates a third set of TCI states, the network device may only use the third set of TCI states as the TCI state for transmission of the PDCCH, or the network device determines that the third set of TCI states is an update for the first set of TCI state, and then the network device uses the third set of TCI states and the second set of TCI states as the TCI states for transmission of the PDCCH. The time t1 is the time closest to the time t2 at which the indication information is sent. The network device may determine that the third set of TCI states is an update for the first set of TCI states according to the indication information or other configuration information, or according to default rules, which is not limited here.

The second CORESET described above is configured with SFN methods, including SFN method 1 and SFN method 2. That is, the PDCCH can be transmitted on the PDCCH candidate associated with this CORESET using the same time-frequency domain resource and the same port, but in different TCI states.

Alternatively, in a case where the channel is a first PDCCH, the first PDCCH includes two PDCCH candidates, two SS sets associated with the two PDCCH candidates have a linked relation, and the SS sets are associated with respective CORESETs, when the network device indicates the indication information that indicates a set of TCI states, it can determine that the TCI state used for transmission of the PDCCH is the current indicated set of TCI states, or the current indicated set of TCI states and at least one set of TCI states previously configured for the PDCCH. For example, the indication information at time t1 indicates a first set of TCI states and a second set of TCI states, the network device determines that the first set of TCI states is associated with a first PDCCH candidate and the second set of TCI states is associated with a second PDCCH candidate. The indication information at time t2 indicates a third set of TCI states. If the network device determines that the third set of TCI states is associated with the first PDCCH candidate, the network device may use only the third set of TCI states as the TCI state for transmission of the PDCCH, that is, the network device only uses the third set of TCI states to send the PDCCH on the first PDCCH candidate; or the network device determines that the third set of TCI states is an update for the first set of TCI states, the network device can use the third set of TCI states and the second set of TCI states as TCI states for transmission of the PDCCH. That is, the network device uses the third set of TCI states to send the PDCCH on the first PDCCH candidate and uses the second set of TCI states to send the PDCCH on the second PDCCH candidate. The time t1 is the time closest to the time t2 at which the indication information is sent. The network device determines that the first set of TCI states is associated with the first PDCCH candidate and the second set of TCI states is associated with the second PDCCH candidate, and determines that the third set of TCI states is an update for the first set of TCI states, according to the indication information or other configuration information, or according to default rules, which is not limited here.

Optionally, if the indication information indicating only one set of TCI states, the network device may only determine that the TCI state used for transmission of a specific channel includes the indicated set of TCI states and at least one set of TCI states previously configured for the specific channel. For example, the specific channel may be a configured-grant type 1 PUSCH or a PUCCH.

In the disclosure, after indicating one set of TCI states by the network device, when at least one channel for the terminal is configured to be based on two sets of TCI states, the network device can determine that the TCI state used for transmission of at least one channel includes the indicated set of TCI states and at least one set of TCI states previously configured for the at least one channel, such that the TCI state determined by the terminal for transmission of the channel and/or the signal is consistent with the TCI state determined by the network device, thereby ensuring the reliability of transmission and improving the transmission quality.

As illustrated in FIG. 11, FIG. 11 is a flowchart of a method for determining a TCI state provided by an embodiment of the disclosure. The method is performed by a network device. As illustrated in FIG. 11, the method may include, but is not limited to, the following steps.

At step 1101, indication information is sent to a terminal, in which the indication information is configured to indicate at least one set of TCI states.

For the specific implementation in the step 1101 reference can be made to the detailed description of any embodiment of the disclosure, which will not be repeated herein again.

At step 1102, in response to transmission of a channel and/or signal being based on one set of TCI states, transmission of one set of TCI states used for the transmission of the channel and/or the signal is determined based on a group identifier associated with the channel and/or the signal.

The channel or channel type includes at least one of: a PDCCH, a PDSCH, a configured-grant type 1 PUSCH, a configured-grant type 2 PUSCH, a dynamic-grant PUSCH, or a PUCCH. The signal includes at least one of: a CSI-RS and an SRS.

Optionally, the terminal may determine a group identifier of a channel or signal in any of the following ways: receiving configuration information configured to indicate a group identifier associated with a channel and/or a signal; or, in response to the channel being a first PUCCH, and a resource location of the first PUCCH being determined based on a parameter of a first CORESET, determining a group identifier associated with the first CORESET as a group identifier associated with the first PUCCH; or, in response to the channel being a second PUCCH with a number greater than a threshold, and a resource location of the second PUCCH being determined based on a total number of CCEs of a second CORESET and a CCE start position of a PDCCH candidate, determining a group identifier associated with the second CORESET as a group identifier associated with the second PUCCH; or, in response to the channel being a PDCCH, determining a group identifier of a CORESET or a CORESET pool index associated with the PDCCH as a group identifier associated with the PDCCH.

Optionally, the indication information may include a group identifier (ID, which can also be called identity document) or an index associated with each set of TCI states. After receiving the indication information, the terminal may determine the set of TCI states associated with the group identifier associated with the channel or the signal in the indication information as the TCI state for transmission of the channel and/or the signal.

The group identifier includes at least one of: a CORESET pool index, a CORESET group identifier, a PUCCH group identifier, a PUSCH group identifier, or a PDSCH group identifier.

That is, the first indication information may include a CORESET pool index, a CORESET group ID, a PUCCH group ID, a PUSCH group ID or a PDSCH group ID associated with each set of TCI states.

In the disclosure, if the network device indicates at least one set of TCI states, then for transmission of a channel and/or signal based on only one set of TCI states, a TCI state whose associated group ID in the indication information is the same as a group ID of the channel or signal is determined as the set of TCI states for transmission of the channel or signal, such that the TCI state determined by the terminal for transmission of the channel and/or the signal is consistent with the TCI state determined by the network device, thereby ensuring the transmission reliability and improving the quality of the transmission.

As illustrated in FIG. 12, FIG. 12 is a schematic diagram of a communication device 1200 provided by an embodiment of the disclosure. The communication device 1200 shown in FIG. 12 may include a transceiver module 1201. The transceiver module 1201 may include a transmitting module and/or a receiving module. The transmitting module is used for realizing a transmitting function, and the receiving module is used for realizing a receiving function. The transceiver module 1201 may realize the transmitting function and/or the receiving function.

It will be appreciated that the communication device 1200 may be a terminal, a device in the terminal, or a device capable of being used together with the terminal.

If the communication device 1200 is on the terminal side,
the transceiver module 1201 is configured to receive indication information, in which the indication information is configured to indicate at least one set of TCI states; and
a processing module 1202 is configured to determine a TCI state for transmission of a channel and/or a signal according to at least one of a configuration for the channel and/or the signal, a number of TCI states indicated in the indication information, or a channel type.

Optionally, one set of TCI states in the at least one set of TCI states includes a joint TCI state; or
one set of TCI states in the at least one set of TCI states includes a separate UL TCI state and/or DL TCI state.

Optionally, the channel includes at least one of: a PDCCH, a PDSCH, a dynamic-grant PUSCH, a configured-grant type 2 PUSCH, repetition of a configured-grant type 2 PUSCH, repetition of a configured-grant type 1 PUSCH, a configured-grant type 1 PUSCH, or a PUCCH. The signal includes at least one of: a CSI RS or an SRS.

Optionally, the configuration for the channel is transmission based on at least two sets of TCI states and/or repetition.

Optionally, the processing module 1202 is configured to: in response to the indication information indicating at least two sets of TCI states, determine that the TCI state for transmission of the channel is a TCI state included in the at least two sets of TCI states.

Optionally, the processing module 1202 is configured to: in response to the indication information indicating one set of TCI states, determine that the TCI state for transmission of the channel and/or the signal is the indicated set of TCI states; or
in response to the indication information indicating one set of TCI states, and a configuration for at least one channel being transmission based on multiple sets of TCI states, determine that the TCI state for transmission of the at least one channel is the indicated set of TCI states and at least one set of TCI states previously configured for the at least one channel.

Optionally, the processing module 1202 is configured to: in response to the channel being the PDSCH, the dynamic-grant PUSCH, the configured-grant type 2 PUSCH, the repetition of the configured-grant type 2 PUSCH, or the repetition of the configured-grant type 1 PUSCH, determine that the TCI state for transmission of the channel is the indicated set of TCI states.

Optionally, the processing module 1202 is configured to: in response to the at least one channel being the configured-grant type 1 PUSCH or the PUCCH, determine that the TCI state for transmission of the PUSCH or PUCCH includes the indicated set of TCI states and at least one set of TCI states previously configured for the PUSCH or the PUCCH.

Optionally, the processing module 1202 is configured to: in response to the transmission of the channel and/or the signal being based on one set of TCI states, determine transmission of one set of TCI states used for the transmission of the channel and/or the signal based on a group identifier associated with the channel and/or the signal;
in which the channel or the channel type includes at least one of: a PDCCH, a PDSCH, a configured-grant type 1 PUSCH, a configured-grant type 2 PUSCH, a dynamic-grant PUSCH, or a PUCCH; and
the signal includes at least one of: a CSI-RS or an SRS.

Optionally, the transceiver module 1201 is configured to: receive configuration information, in which the configuration information is configured to indicate the group identifier associated with the channel and/or the signal; or
the processing module 1202 is configured to: in response to the channel being a first PUCCH, and a resource location of the first PUCCH being determined based on a parameter of a first CORESET, determine a group identifier associated with the first CORESET as a group identifier associated with the first PUCCH; or
the processing module 1202 is configured to: in response to the channel being a second PUCCH with a number greater than a threshold and a resource location of the second PUCCH being determined based on a total number of CCEs of a second CORESET and a CCE start position of a candidate PDCCH, determine a group identifier associated with the second CORESET as a group identifier associated with the second PUCCH; or
the processing module 1202 is configured to: in response to the channel being a PDCCH, determine a group identifier of a CORESET or a CORESET pool index associated with the PDCCH as a group identifier associated with the PDCCH.

Optionally, the indication information includes a group identifier associated with each set of TCI states.

Optionally, the group identifier includes at least one of:
a CORESET pool index, a CORESET group identifier, a PUCCH group identifier, a PUSCH group identifier, or a PDSCH group identifier.

Optionally, the channel includes:
a PDCCH transmitted based on a second CORESET, in which the second CORESET is configured with at least two sets of TCI states; or
a first PDCCH, in which the first PDCCH includes two candidate PDCCHs, two SS sets associated with the two candidate PDCCHs have a linked relation, and the SS sets are associated with respective CORESETs.

Optionally, the indication information includes a MAC CE, or DCI and a MAC CE.

In the disclosure, after receiving at least one set of TCI states indicated by the network device, the terminal can determine a TCI state for transmission of a channel and/or a signal according to at least one of a configuration for the channel and/or the signal, a number of TCI states indicated in the indication information or a channel type, such that the TCI state determined by the terminal for transmission of the channel and/or the signal is consistent with the TCI state determined by the network device, thereby ensuring the transmission reliability and improving the transmission quality.

It will be appreciated that the communication device 1200 may be a network device, a device in the network device, or a device capable of being used together with the network device.

If the communication device 1200 is on the network device side,
the transceiver module 1201 is configured to send indication information to a terminal, in which the indication information is configured to indicate at least one set of TCI states; and
the processing module 1202 is configured to determine a TCI state for transmission of a channel and/or a signal according to at least one of a configuration for the channel and/or the signal, a number of TCI states indicated in the indication information, or a channel type.

Optionally, one set of TCI states in the at least one set of TCI states includes a joint TCI state; or
one set of TCI states in the at least one set of TCI states includes a separate UL TCI state and/or DL TCI state.

Optionally, the channel includes at least one of: a PDCCH, a PDSCH, a dynamic-grant PUSCH, a configured-grant type 2 PUSCH, repetition of a configured-grant type 2 PUSCH, repetition of a configured-grant type 1 PUSCH, a configured-grant type 1 PUSCH, or a PUCCH. The signal includes at least one of: a CSI RS or an SRS.

Optionally, the configuration for the channel is transmission based on at least two sets of TCI states and/or repetition.

Optionally, the processing module 1202 is configured to: in response to the indication information indicating at least two sets of TCI states, determine that the TCI state for transmission of the channel is a TCI state included in the at least two sets of TCI states.

Optionally, the processing module 1202 is configured to: in response to the indication information indicating one set of TCI states, determine that the TCI state for transmission of the channel and/or the signal is the indicated set of TCI states; or
in response to the indication information indicating one set of TCI states, and a configuration for at least one channel being transmission based on multiple sets of TCI states, determine that the TCI state for transmission of the at least one channel is the indicated set of TCI states and at least one set of TCI states previously configured for the at least one channel.

Optionally, the processing module 1202 is configured to: in response to the channel being a PDSCH, a dynamic-grant PUSCH, a configured-grant type 2 PUSCH, repetition of a configured-grant type 2 PUSCH, or repetition of a configured-grant type 1 PUSCH, determine that the TCI state for transmission of the channel is the indicated set of TCI states.

Optionally, the processing module 1202 is configured to: in response to the at least one channel being the configured-grant type 1 PUSCH or the PUCCH, determine that the TCI state for transmission of the PUSCH or PUCCH includes the indicated set of TCI states and at least one set of TCI states previously configured for the PUSCH or PUCCH.

Optionally, the processing module 1202 is configured to: in response to the transmission of the channel and/or the signal being based on one set of TCI states, determine transmission of one set of TCI states used for the transmission of the channel and/or the signal based on a group identifier associated with the channel and/or the signal;
in which the channel or the channel type includes at least one of: a PDCCH, a PDSCH, a configured-grant type 1 PUSCH, a configured-grant type 2 PUSCH, a dynamic-grant PUSCH, or a PUCCH; and
the signal includes at least one of: a CSI-RS or an SRS.

Optionally, the transceiver module 1201 is configured to: receive configuration information, in which the configuration information is configured to indicate the group identifier associated with the channel and/or the signal; or
the processing module 1202 is configured to: in response to the channel being a first PUCCH, and a resource location of the first PUCCH being determined based on a parameter of a first CORESET, determine a group identifier associated with the first CORESET as a group identifier associated with the first PUCCH; or
the processing module 1202 is configured to: in response to the channel being a second PUCCH with a number greater than a threshold and a resource location of the second PUCCH being determined based on a total number of CCEs of a second CORESET and a CCE start position of a candidate PDCCH, determine a group identifier associated with the second CORESET as a group identifier associated with the second PUCCH; or
the processing module 1202 is configured to: in response to the channel being a PDCCH, determine a group identifier of a CORESET or a CORESET pool index associated with the PDCCH as a group identifier associated with the PDCCH.

Optionally, the indication information includes a group identifier associated with each set of TCI states.

Optionally, the group identifier includes at least one of:
a CORESET pool index, a CORESET group identifier, a PUCCH group identifier, a PUSCH group identifier, or a PDSCH group identifier.

Optionally, the channel includes:
a PDCCH transmitted based on a second CORESET, in which the second CORESET is configured with at least two sets of TCI states; or
a first PDCCH, in which the first PDCCH includes two candidate PDCCHs, two SS sets associated with the two candidate PDCCHs have a linked relation, and the SS sets are associated with respective CORESETs.

Optionally, the indication information includes a MAC CE, or DCI and a MAC CE.

In the disclosure, after indicating at least one set of TCI states to the terminal, the network device can determine a TCI state for transmission of a channel and/or a signal according to at least one of a configuration for the channel and/or the signal, a number of TCI states indicated in the indication information or a channel type, such that the TCI state determined by the terminal for transmission of the channel and/or the signal is consistent with the TCI state determined by the network device, thereby ensuring the transmission reliability and improving the transmission quality.

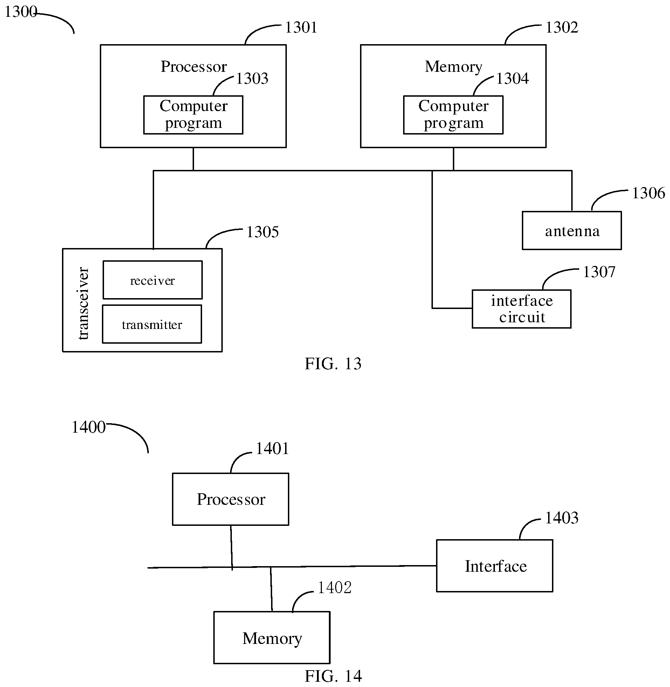

As illustrated in FIG. 13, FIG. 13 is a schematic diagram of a communication device 1300 provided by an embodiment of the disclosure. The communication device 1300 may be a network device, a communication assisting device, a terminal, or a chip, a chip system or a processor that supports the network device to realize the above-described methods, or a chip, a chip system or a processor that supports the communication assisting device to realize the above-described methods, or a chip, a chip system or a processor that supports the terminal to realize the above-described methods. The device may be used to realize the methods described in the above method embodiments with reference to the description of the above-described method embodiments.

The communication device 1300 may include one or more processors 1301. The processor 1301 may be a general purpose processor or a dedicated processor, such as, a baseband processor or a central processor. The baseband processor is used for processing communication protocols and communication data. The central processor is used for controlling the communication device (e.g., base station, baseband chip, terminal, terminal chip, DU, or CU), executing computer programs, and processing data of the computer programs.

Optionally, the communication device 1300 may include one or more memories 1302 on which a computer program 1304 may be stored. The processor 1301 executes the computer program 1304 to cause the communication device 1300 to perform the methods described in the above method embodiments. Optionally, the memory 1302 may also store data. The communication device 1300 and the memory 1302 may be provided separately or may be integrated together.

Optionally, the communication device 1300 may also include a transceiver 1305 and an antenna 1306. The transceiver 1305 may be referred to as transceiver unit, transceiver machine, or transceiver circuit, for realizing the transceiver function. The transceiver 1305 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication device 1300 may also include one or more interface circuits 1307. The interface circuits 1307 are used to receive code instructions and transmit them to the processor 1301. The processor 1301 runs the code instructions to cause the communication device 1300 to perform the methods described in the method embodiments.

For example, if the communication device 1300 is a terminal, the transceiver 1305 may perform step 201 in FIG. 2. The processor 1301 is used to perform step 202 in FIG. 2 and step 302 in FIG. 3.

Alternatively, if the communication device 1300 is a network device, the transceiver 1305 is used to perform step 701 in FIG. 7, step 801 in FIG. 8, and step 901 in FIG. 9. The processor 1301 is used to perform step 702 in FIG. 7 and step 802 in FIG. 8.

In an implementation, the processor 1301 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1301 may store a computer program 1303. The computer program 1303 runs on the processor 1301 and causes the communication device 1300 to perform the methods described in the method embodiments above. The computer program 1303 may be solidified in the processor 1301, in which case the processor 1301 may be implemented by hardware.

In an implementation, the communication device 1300 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device described in the above embodiments may be a network device, a terminal, or a communication assisting device, but the scope of the communication device described in the disclosure is not limited thereto, and the structure of the communication device may not be limited by FIG. 13. The communication device may be a stand-alone device or may be part of a larger device. For example, the communication device may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case where the communication device is a chip or a chip system may be referred to the schematic diagram of a chip shown in FIG. 14. In FIG. 14, the chip includes a processor 1401 and an interface 1403. There may be one or more processors 1401, and there may be multiple interfaces 1403.

For the case where the chip is used to implement the functions of the terminal in the embodiments of the disclosure,
the interface 1403 is configured to executed step 201 in FIG. 2.

For the case where the chip is used to implement the functions of the network device in the embodiments of the disclosure,
the interface 1403 is configured to execute step 701 in FIG. 7, step 801 in FIG. 8, and step 901 in FIG. 9.

Optionally, the chip further includes a memory 1402 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The foregoing are only specific implementations of the disclosure, but the scope of protection of the disclosure is not limited thereto. Any technician skilled in the art can easily think of variations or substitutions within the technical scope disclosed in the disclosure, and the variations or substitutions shall be covered by the scope of protection of the disclosure. Therefore, the scope of protection of the disclosure only be limited by the appended claims.

## Claims

1. A method for determining a transmission configuration indication (TCI) state, performed by a terminal, comprising:
receiving indication information, wherein the indication information is configured to indicate at least one set of TCI states; and
determining a TCI state for transmission of a channel and/or a signal according to at least one of a configuration for the channel and/or the signal, a number of TCI states indicated in the indication information, or a channel type.

2. The method of claim 1, wherein
one set of TCI states in the at least one set of TCI states comprises a joint TCI state; or
one set of TCI states in the at least one set of TCI states comprises a separate uplink (UL) TCI state and/or downlink (DL) TCI state.

3. The method of claim 1, wherein
the channel comprises at least one of: a physical downlink control channel (PDCCH), a physical downlink shared channel (PDSCH), a dynamic-grant physical uplink shared channel (PUSCH), a configured-grant type 2 PUSCH, repetition of a configured-grant type 2 PUSCH, repetition of a configured-grant type 1 PUSCH, a configured-grant type 1 PUSCH, or a physical uplink control channel (PUCCH); and
the signal comprises at least one of: a channel state information reference signal (CSI RS) or a sounding reference signal (SRS).

4. The method of claim 3, wherein the configuration for the channel is transmission based on at least two sets of TCI states and/or repetition.

5. The method of claim 3 or 4, wherein determining the TCI state for transmission of the channel and/or the signal comprises:
in response to the indication information indicating at least two sets of TCI states, determining that the TCI state for transmission of the channel is a TCI state comprised in the at least two sets of TCI states.

6. The method of claim 3 or 4, wherein determining the TCI state for transmission of the channel and/or the signal comprises:
in response to the indication information indicating one set of TCI states, determining that the TCI state for transmission of the channel and/or the signal is the indicated set of TCI states; or
in response to the indication information indicating one set of TCI states, and a configuration for at least one channel being transmission based on multiple sets of TCI states, determining that the TCI state for transmission of the at least one channel comprises the indicated set of TCI states and at least one set of TCI states previously configured for the at least one channel.

7. The method of claim 6, wherein determining the TCI state for transmission of the channel and/or the signal comprises:
in response to the channel being the PDSCH, the dynamic-grant PUSCH, the configured-grant type 2 PUSCH, the repetition of the configured-grant type 2 PUSCH, or the repetition of the configured-grant type 1 PUSCH, determining that the TCI state for transmission of the channel is the indicated set of TCI states.

8. The method of claim 6, wherein determining that the TCI state for transmission of the at least one channel comprises the indicated set of TCI states and the at least one set of TCI states previously configured for the at least one channel comprises:
in response to the at least one channel being the configured-grant type 1 PUSCH or the PUCCH, determining that the TCI state for transmission of the configured-grant type 1 PUSCH or the PUCCH comprises the indicated set of TCI states and at least one set of TCI states previously configured for the configured-grant type 1 PUSCH or the PUCCH.

9. The method of claim 1, wherein determining the TCI state for transmission of the channel and/or the signal comprises:
in response to the transmission of the channel and/or the signal being based on one set of TCI states, determining one set of TCI states used for the transmission of the channel and/or the signal based on a group identifier associated with the channel and/or the signal;
wherein the channel or the channel type comprises at least one of: a PDCCH, a PDSCH, a configured-grant type 1 PUSCH, a configured-grant type 2 PUSCH, a dynamic-grant PUSCH, or a PUCCH; and
the signal comprises at least one of: a CSI-RS or an SRS.

10. The method of claim 9, further comprising:
receiving configuration information, wherein the configuration information is configured to indicate the group identifier associated with the channel and/or the signal;
in response to the channel being a first PUCCH, and a resource location of the first PUCCH being determined based on a parameter of a first control resource set (CORESET), determining a group identifier associated with the first CORESET as a group identifier associated with the first PUCCH;
in response to the channel being a second PUCCH with a number greater than a threshold and a resource location of the second PUCCH being determined based on a total number of control channel elements (CCEs) of a second CORESET and a CCE start position of a candidate PDCCH, determining a group identifier associated with the second CORESET as a group identifier associated with the second PUCCH; or
in response to the channel being a PDCCH, determining a group identifier of a CORESET or a CORESET pool index associated with the PDCCH as a group identifier associated with the PDCCH.

11. The method of claim 10, wherein the indication information comprises a group identifier associated with each set of TCI states.

12. The method of claim 11, wherein the group identifier comprises at least one of:
a CORESET pool index, a CORESET group identifier, a PUCCH group identifier, a PUSCH group identifier, or a PDSCH group identifier.

13. The method of claim 6, wherein the channel comprises:
a PDCCH transmitted based on a second CORESET, wherein the second CORESET is configured with at least two sets of TCI states; or
a first PDCCH, wherein the first PDCCH comprises two candidate PDCCHs, two search space (SS) sets associated with the two candidate PDCCHs have a linked relation, and the SS sets are associated with respective CORESETs.

14. The method of any one of claims 1-13, wherein the indication information comprises: a medium access control layer control element (MAC CE), or downlink control information (DCI) and a MAC CE.

15. A method for determining a transmission configuration indication (TCI) state, performed by a network device, comprising:
sending indication information to a terminal, wherein the indication information is configured to indicate at least one set of TCI states; and
determining a TCI state for transmission of a channel and/or a signal according to at least one of a configuration for the channel and/or the signal of the terminal, a number of TCI states indicated in the indication information, or a channel type.

16. The method of claim 15, further comprising:
one set of TCI states in the at least one set of TCI states comprises a joint TCI state; or
one set of TCI states in the at least one set of TCI states comprises a separate uplink (UL) TCI state and/or downlink (DL) TCI state.

17. The method of claim 15, wherein
the channel comprises at least one of: a physical downlink control channel (PDCCH), a physical downlink shared channel (PDSCH), a dynamic-grant physical uplink shared channel (PUSCH), a configured-grant type 2 PUSCH, repetition of a configured-grant type 2 PUSCH, repetition of a configured-grant type 1 PUSCH, a configured-grant type 1 PUSCH, or a physical uplink control channel (PUCCH); and
the signal comprises at least one of: a channel state information reference signal (CSI RS) or a sounding reference signal (SRS).

18. The method of claim 17, wherein the configuration for the channel is transmission based on at least two sets of TCI states and/or repetition.

19. The method of claim 17 or 18, wherein determining the TCI state for transmission of the channel and/or the signal for the terminal comprises:
in response to the indication information indicating at least two sets of TCI states, determining that the TCI state for transmission of the channel is a TCI state comprised in the at least two sets of TCI states.

20. The method of claim 17 or 18, wherein determining the TCI state for transmission of the channel and/or the signal for the terminal comprises:
in response to the indication information indicating one set of TCI states, determining that the TCI state for transmission of the channel and/or the signal is the indicated set of TCI states; or
in response to the indication information indicating one set of TCI states, and a configuration for at least one channel being transmission based on multiple sets of TCI states, determining that the TCI state for transmission of the at least one channel comprises the indicated set of TCI states and at least one set of TCI states previously configured for the at least one channel.

21. The method of claim 20, wherein determining the TCI state for transmission of the channel and/or the signal for the terminal comprises:
in response to the channel being the PDSCH, the dynamic-grant PUSCH, the configured-grant type 2 PUSCH, the repetition of the configured-grant type 2 PUSCH, or the repetition of the configured-grant type 1 PUSCH, determining that the TCI state for transmission of the channel is the indicated set of TCI states.

22. The method of claim 20, wherein determining that the TCI state for transmission of the at least one channel comprises the indicated set of TCI states and the at least one set of TCI states previously configured for the at least one channel comprises:
in response to the at least one channel being the configured-grant type 1 PUSCH or the PUCCH, determining that the TCI state for transmission of the configured-grant type 1 PUSCH or PUCCH comprises the indicated set of TCI states and at least one set of TCI states previously configured for the configured-grant type 1 PUSCH or the PUCCH.

23. The method of claim 15, wherein determining the TCI state for transmission of the channel and/or the signal comprises:
in response to the transmission of the channel and/or the signal being based on one set of TCI states, determining one set of TCI states used for the transmission of the channel and/or the signal based on a group identifier associated with the channel and/or the signal;
wherein the channel or the channel type comprises at least one of: a PDCCH, a PDSCH, a configured-grant type 1 PUSCH, a configured-grant type 2 PUSCH, a dynamic-grant PUSCH, or a PUCCH; and
the signal comprises at least one of: a CSI-RS or an SRS.

24. The method of claim 23, further comprising:
receiving configuration information, wherein the configuration information is configured to indicate the group identifier associated with the channel and/or the signal;
in response to the channel being a first PUCCH, and a resource location of the PUCCH being determined based on a parameter of a first control resource set (CORESET), determining a group identifier associated with the first CORESET as a group identifier associated with the first PUCCH;
in response to the channel being a second PUCCH with a number greater than a threshold and a resource location of the second PUCCH being determined based on a total number of control channel elements (CCEs) of a second CORESET and a CCE start position of a candidate PDCCH, determining a group identifier associated with the second CORESET as a group identifier associated with the second PUCCH; or
in response to the channel being a PDCCH, determining a group identifier of a CORESET or a CORESET pool index associated with the PDCCH as a group identifier associated with the PDCCH.

25. The method of claim 23, wherein the indication information comprises a group identifier associated with each set of TCI states.

26. The method of claim 25, wherein the group identifier comprises at least one of:
a CORESET pool index, a CORESET group identifier, a PUCCH group identifier, a PUSCH group identifier, or a PDSCH group identifier.

27. The method of claim 17, wherein the channel and/or the signal comprises:
a PDCCH transmitted based on a second CORESET, wherein the second CORESET is configured with at least two sets of TCI states; or
a first PDCCH, wherein the first PDCCH comprises two candidate PDCCHs, two search space (SS) sets associated with the two candidate PDCCHs have a linked relation, and the SS sets are associated with respective CORESETs.

28. The method of any one of claims 15-27, wherein the indication information comprises: a medium access control layer control element (MAC CE), or downlink control information (DCI) and a MAC CE.

29. A communication device, provided in a terminal, comprising:
a transceiver module, configured to receive indication information, wherein the indication information is configured to indicate at least one set of transmission configuration indication (TCI) states; and
a processing module, configured to determine a TCI state for transmission of a channel and/or a signal according to at least one of a configuration for the channel and/or the signal, a number of TCI states indicated in the indication information, or a channel type.

30. A communication device, provided in a network device, comprising:
a transceiver module, configured to send indication information to a terminal, wherein the indication information is configured to indicate at least one set of transmission configuration indication (TCI) states; and
a processing module, configured to determine a TCI state for transmission of a channel and/or a signal according to at least one of a configuration for the channel and/or the signal, a number of TCI states indicated in the indication information, or a channel type.

31. A communication device, comprising a processor, and a memory having computer programs stored thereon, wherein when the computer programs are executed by the processor, the device is caused to implement the method of any one of claims 1-14, or the method of any one of claims 15-28.

32. A computer-readable storage medium for storing instructions, wherein when the instructions are executed, the method of any one of claims 1-14 or the method of any one of claims 15-28 is implemented.
